# EUROPÄISCHE PATENTSCHRIFT

(11) **EP 2 697 083 B1**
(45) Veröffentlichungstag und Bekanntmachung des Hinweises auf die Patenterteilung: **13.05.2015**
(21) Anmeldenummer: 12714945.8
(22) Anmeldetag: 21.03.2012
(51) Int. Cl.: B60G 13/00, B60G 15/07, B62D 7/18

(54) **SCHWENKLAGER**
STEERING KNUCKLE
PALIER OSCILLANT

(30) Priorität: 09.04.2011 DE 102011016628
(43) Veröffentlichungstag der Anmeldung: 19.02.2014
(73) Patentinhaber: Volkswagen Aktiengesellschaft, 38440 Wolfsburg (DE)
(72) Erfinder: JAZBEC, Adrijan, 38170 Schöppenstedt (DE); FIEBIG, Sierk, 38259 Salzgitter (DE)
(86) Internationale Anmeldenummer: PCT/EP2012/001232
(87) Internationale Veröffentlichungsnummer: WO 2012/139701

(56) Entgegenhaltungen:
- DE-A1- 19 923 694
- GB-A- 2 340 093

## Beschreibung

Die Erfindung bezieht sich auf ein Schwenklager für eine Fahrzeugradaufhängung nach dem Oberbegriff von Patentanspruch 1.

Schwenklager, welche auch als Radträger oder Achsschenkel bezeichnet werden, stellen die Verbindung zwischen einem Dämpfer oder Federbein, einem Radlager sowie einem Spurstange an der Vorderachse eines Kraftfahrzeugs her. Üblicherweise sind diese als Guss- oder Schmiedeteile ausgebildet und im Hinblick auf die Verminderung der ungefederten Massen am Fahrzeug aus Leichtmetall hergestellt. Im Betrieb wird das Schwenklager u. a. durch die Dämpfer- und/oder Federkräfte beansprucht, welche über das Radlager abgestützt werden müssen. Zudem müssen im Schwenklager Bremsmomente aufgenommen werden.

Ein Schwenklager der eingangs genannten Art ist aus DE 199 23 694 A1 bekannt. Weitere Schwenklager sind aus EP 1 314 630 A2 und DE 102 12 873 A1 bekannt. Im Hinblick auf die vorgenannte Beanspruchung sind bei den bekannten Schwenklagern von dem Hülsenabschnitt zu dem Radlageranbindungsabschnitt herabziehende Rippen vorgesehen, um einerseits den Festigkeitsanforderungen Rechnung zu tragen und andererseits eine leichtgewichtige Bauweise zu erzielen.

Ein Schwenklager mit Dreipunkt-Radlagerbefestigung ist aus GB 2 340 093 A bekannt.

Davon ausgehend liegt der Erfindung die Aufgabe zugrunde, bei Aufrechterhaltung der Strukturfestigkeit das Bauteilgewicht eines Schwenklagers weiter zu verbessern.

Diese Aufgabe wird durch ein Schwenklager gemäß Patentanspruch 1 gelöst.

Durch eine Dreipunkt-Radlagerung wird in Kombination mit einer Diagonalrippe gegenüber den aus DE 199 23 694 A1, EP 1 314 630 A2 und DE 102 12 873 A1 bekannten Lösungen eine zusätzliche Gewichtsersparnis erzielt, welche nicht auf Kosten der Struktursteifigkeit des Schwenklagers geht. Vielmehr wird über die Diagonalrippe eine optimale Kraftübertragung in Bezug auf Feder- und Dämpferkräfte zwischen einem Dämpfer oder Federbein und einem Radlager erzielt. Das erfindungsgemäße Schwenklager zeichnet sich insbesondere durch eine Steifigkeitssteigerung im Bereich des Hülsenabschnitts aus, welcher der Aufnahme des Dämpfers oder Federbeins dient.

Ferner weist der Grundkörper einen auskragenden Spurstangenanbindungsarm auf. Gleichzeitig verläuft von dem Hülsenabschnitt eine Strebe zu dem Spurstangenanbindungsarm. Dabei bildet die Strebe zumindest an der Radseite eine weitere Rippe aus, welche mit der Diagonalrippe einen Dreiecksraum begrenzt, der eine einwärts gerichtete Wanne oberhalb des Radlageranbindungsabschnitts bildet. Hierdurch ergibt sich ein versteifendes Fachwerk, das bei geringem Gewicht eine besonders hohe Steifigkeit bereitstellt.

Vorteilhafte Ausgestaltungen der Erfindung sind in weiteren Patentansprüchen angegeben.

So kann beispielsweise der Hülsenabschnitt an seinem Außenumfang auf der Radseite zusätzlich zu der Diagonalrippe eine Vertikalrippe aufweisen, wodurch die Tragfähigkeit des Schwenklagers weiter erhöht wird, so dass dieses für höhere Achslasten einsetzbar ist.

In einer vorteilhaften Ausgestaltung läuft die Vertikalrippe in Richtung auf die dem Hülsenabschnitt am nächsten liegende Befestigungsöffnung des Radlageranbindungsabschnitts zu. Hierdurch werden Biegemomente im Schwenklager vermieden.

Gegebenenfalls kann zur weiteren Gewichtsverminderung im Bereich des Dreiecksraums ein Durchbruch in Form eines Fensters vorgesehen sein.

In einer weiteren vorteilhaften Ausgestaltung tritt die Rippe der Strebe unterhalb des Ansatzes der Diagonalrippe am Hülsenabschnitt aus dem Außenumfang des Hülsenabschnitts heraus, wodurch die primäre Abstützung auf die oberste Befestigungsöffnung des Radlageranbindungsabschnitt zielt, gleichwohl die Abstützbasis verbreitert wird.

Vorzugsweise ist die Rippe der Strebe im Hinblick auf einen guten Kraftabfluss auf die am zweitweitesten von dem Hülsenabschnitt beanstandete Befestigungsöffnung des Radlageranbindungsabschnitts hin ausgerichtet.

Gemäß einer weiteren vorteilhaften Ausgestaltung weist das Schwenklager im Bereich des Hülsenabschnitts und des Radlageranbindungsabschnitts in Blickrichtung auf die Radseite eine Rippenstruktur in Form eines liegenden "S" auf. Hieraus resultiert bei minimalem Bauteilgewicht des Schwenklagers eine äußerst steife Abstützung des Dämpfers oder Federbeins am Radlager.

Weiterhin können an dem Grundkörper zwei Nocken mit jeweils einem Anbindungspunkt zur Ankopplung eines Bremssattels ausbildet sein. Dabei verläuft die Verbindungslinie der Bremssattelanbindungspunkte in Blickrichtung auf die Radseite im Wesentlichen parallel zu der Verbindungslinie zwischen den zwei Befestigungsöffnungen des Radlageranbindungsabschnitts mit größtem und kleinstem Abstand zum Hülsenabschnitt. Als im Wesentlichen parallel werden vorliegend Winkelabweichungen von maximal plus/minus 5° verstanden.

Nachfolgend wird die Erfindung anhand eines in der Zeichnung dargestellten Ausführungsbeispiels näher dargestellt. Die Zeichnung zeigt in:

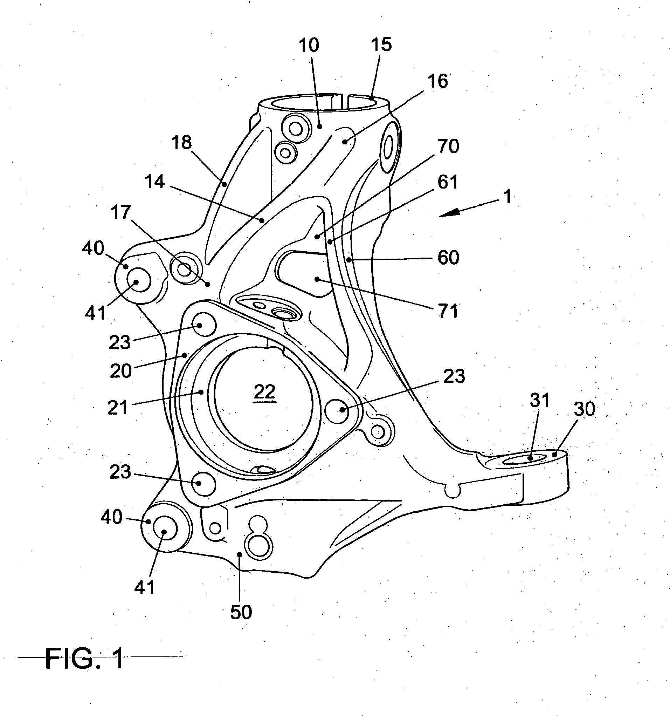

- Figur 1: eine räumliche Ansicht eines Ausführungsbeispiels für ein Schwenklager nach der Erfindung,

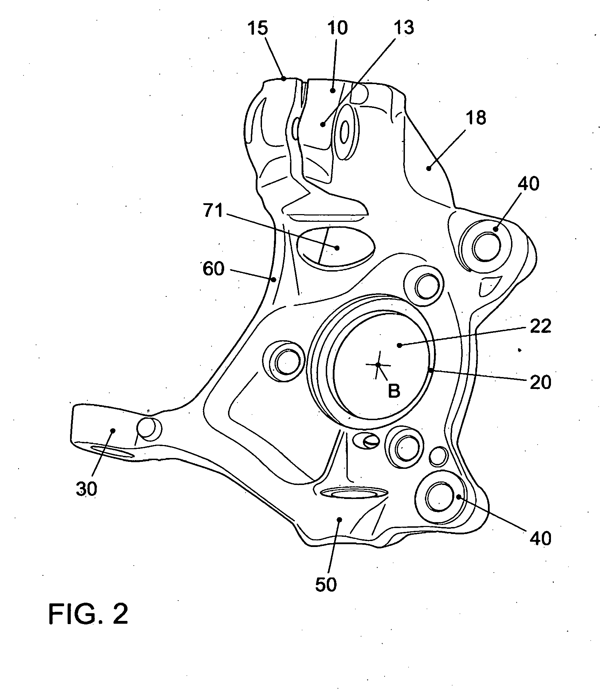

- Figur 2: eine weitere räumliche Ansicht des Schwenkiagers nach Fig. 1, und in
- Figur 3: eine Seitenansicht des Schwenklagers in Blickrichtung auf die Radseite.

Das Ausführungsbeispiel zeigt ein Schwenklager 1 für eine Fahrzeugradaufhängung am Beispiel einer Vorderachse eines Personenkraftfahrzeugs. Dabei stellt das Schwenklager 1 ein einstückiges Verbindungsglied zwischen einem Dämpfer oder Federbein, einem Radlager und einer Spurstange dar.

Das dargestellte Ausführungsbeispiel zeigt eine Ausführung aus Leichtmetall, wobei das Schwenklager 1 entweder ein Guss- oder Schmiedeteil ist.

Zur Ankopplung der genannten Komponenten bildet das Schwenklager 1 verschiedene Anbindungsabschnitte aus, welche in ein gemeinsames Bauteil integriert sind.

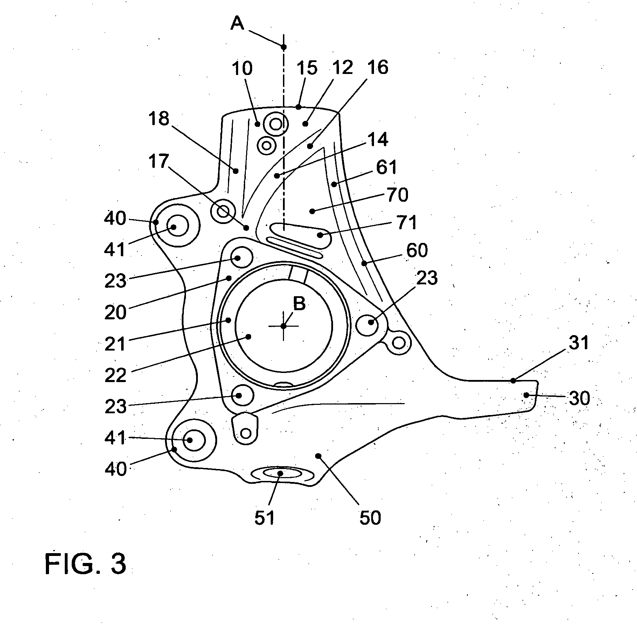

Als Dämpfer- oder Federbeinaufnahme dient ein im Wesentlichen zylindrischer Hülsenabschnitt 10 mit in etwa konstanter Wanddicke. Der Hülsehabschnitt 10 weist an der einem Fahrzeugrad abgewandten Seite einen Längsschlitz 11 sowie eine an den Außenumfang 12 des Hülsenabschnitts 10 angeformte Klemmeinrichtung 13 auf. Letztere ermöglicht ein Verspannen der Hülsenhälften zur Festlegung beispielsweise eines Endabschnitts eines Behälterrohres eines Dämpfers. Die Längsachse des Hülsenabschnitts 10 ist in Figur 3 mit "A" gekennzeichnet. Sie verläuft bei einem am Fahrzeug montierten Schwenklager in etwa in Vertikalrichtung. Der Winkel zur Vertikalrichtung beträgt dabei bis zu 10 Grad.

An den Hülsenabschnitt 10 schließt ein Radlageranbindungsabschnitt 20 an. Dieser weist an der Radseite eine topfartige Vertiefung 21 zur Aufnahme eines stationären Abschnitts eines Radlagers auf. Innerhalb der Vertiefung ist eine Durchgangsöffnung 22 ausgebildet, deren Mittelachse B der Drehachse eines zu lagernden Fahrzeugrads entspricht. Die Mittelachse B schließt dementsprechend mit der Längsachse A des Hülsenabschnitts einen Winkel von etwa 80 bis 90 Grad ein. Um die topfartige Vertiefung 21 erstreckt sich an der Radseite des Radlageranbindungsabschnitts 20 eine bearbeitete Abstützfläche 22, gegen die der stationäre Abschnitt des Radlagers axial verspannt wird. In der Abstützfläche 22 befinden sich drei Befestigungsöffnungen 23 zur Festlegung des Radlagers an dem Radlageranbindungsabschnitt 20. Die Befestigungsöffnungen 23 sind dabei zueinander gleichbeabstandet um die Mittelachse B bzw. die zentrale Durchgangsöffnung 22 herum angeordnet. Sie bilden ein gleichzeitiges Dreieck, das so angeordnet ist, dass in Einbaulage am Fahrzeug eine der Seiten des Dreiecks im Wesentlichen in Vertikalrichtung verläuft. Bei dem dargestellten Ausführungsbeispiel sind die Befestigungsöffnungen 23 Durchgangsöffnungen, durch welche jeweils ein Befestigungsbolzen hindurchgeführt werden kann. Es ist jedoch auch möglich, die Befestigungsöffnungen 23 jeweils mit einem Innengewinde zu versehen, um einen Befestigungsbolzen unmittelbar in diese einzuschrauben.

Weiterhin bildet das Schwenklager 1 einen Spurstangenänbindungsarm 30 aus, der, bezogen auf die Vertikalrichtung in Einbaulage, unterhalb der Mittelachse B der Durchgangsöffnung 22 des Radlageranbindungsabschnitts 20 von letzterem absteht und eine Befestigungseinrichtung 31 zur Ankopplung einer Spurstange aufweist.

An der dem Spurstangenanbindungsarm 30 gegenüberliegenden Seite sind an den Radtageranbindungsabschnitt 20 zwei Nocken 40 zur Befestigung eines Bremssattels angeformt. An jedem der Nocken 40 befindet sich eine Befestigungseinrichtung 41 zur Bremssattelankopplung.

Die Befestigungseinrichtungen 41 zur Bremssattelankopplung sind benachbart zu jeweils einer der Befestigungsöffnungen 23 des Radlageranbindungsabschnitts angeordnet. Die Verbindungslinie der in Bremssattelanbindungspunkte 41 verläuft, in Blickrichtung auf die Radseite, in etwa parallel zu der Verbindungslinie zwischen den zwei Befestigungsöffnungen 23 des Radlageranbindungsabschnitts 20 mit größtem und kleinstem Abstand zum Hülsenabschnitt 10. Dabei sind kleine Winkelabweichungen von bis zu 5 Grad zulässig.

Das Schwenklager 1 weist ferner einen Führungsgelenkanbindungsabschnitt 50 zur Ankopplung eines Radführungslenkers auf. Der Führungsgelenkanbindungsabschnitt 50 ist bezogen auf die Einbaulage am Fahrzeug unterhalb des Radlageranbindungsabschnitts 20 angeordnet und weist eine Befestigungseinrichtung 51 zur Ankopplung eines entsprechenden Gelenks des Radführungslenkers auf.

Zur Erzielung eines geringen Bauteilgewichts bei gleichzeitiger Gewährleistung einer hohen Struktursteifigkeit sind an dem vorstehend erläuterten Schwenklager-Grundkörper die nachfolgend näher erläuterten Maßnahmen getroffen. Insbesondere ist die Verbindung zwischen dem Hülsenabschnitt 10 und dem Radlageranbindungsabschnitt 20 durch eine besondere Verrippung versteift.

Wie in Figur 3 gezeigt, tritt eine Diagonalrippe 14 aus dem zylindrischen Außenumfang 12 des Hülsenabschnitts 10 heraus und verläuft an der Radseite zu der dem Hülsenabschnitt 10 nächstliegenden Befestigungsöffnung 23 des Radlageranbindungsäbschnitts 20. Dabei quert die Diagonalrippe 14 die Längsachse A des Hülsenabschnitts 10. Insbesondere wächst die Diagonalrippe 14 aus einem von der Oberkante 15 des Hülsenabschnitts 10 zumindest um die Rippenbreite beabstandeten Bereich des Außenumfangs 12 heraus. Sie schließt, in Blickrichtung auf die Radseite des Schwenklagers 1, mit der Längsachse A des Hülsenabschnitts 10 einen Winkel im Bereich von 35 bis 55 Grad, vorzugsweise 40 bis 50 Grad ein. Der Verlauf der Diagonalrippe 14 ist entweder geradlinig oder aber nach unten gekrümmt. Die maximale Höhe der Rippe 14 beträgt weniger als 12 Millimeter. Die Breite der Diagonalrippe 14 auf halber Höhe ihrer Flanken liegt im Bereich von 5 bis 15 Millimetern. Wie Figur 3 weiter entnommen werden kann, ist die Diagonalrippe 14 zwischen ihren Enden 16 und 17 kreuzungsfrei.

Weiterhin weist der Hülsenabschnitt 10 an seinem Außenumfang 12 auf der Radseite eine Vertikalrippe 18 auf. Durch diese wird eine weitere Erhöhung der Tragfähigkeit bzw. der zulässigen Achslasten erzielt. Bei geringerer Belastung kann diese Vertikalrichtung 18 auch weggelassen werden. Die Vertikalrippe 18 läuft in Richtung auf die dem Hülsenabschnitt 10 am nächsten liegende Befestigungsöffnung 23 des Radlageranbindungsabschnitts 20 zu. Sie setzt weiter oben als die Diagonalrippe 14 am Außenumfang 12 des Hülsenabschnitts 10 an und endet etwas oberhalb vor dem radlagerseitigen Ende 17 der Diagonalrippe 14. Bei dem dargestellten Ausführungsbeispiel weist die Vertikalrippe 18 eine kleinere Höhe und eine kleinere Breite als die Diagonalrippe 14 auf. Zudem kann ihr Verlauf, in Blickrichtung auf die Radseite, von der Vertikalrichtung etwas abweichen. Insbesondere schließt der Verlauf der Vertikalrippe 18 mit der Längsachse A des Hülsenabschnitts 10 einen Winkel im Bereich von plus/minus 10 Grad ein.

Von dem Hülsenabschnitt 10 leitet eine Strebe 60 zu dem Spurstangenanbindungsarm 30. Die Strebe 60 tangiert dabei den Radlageranbindungsabschnitt 20 oberhalb derjenigen Befestigungsöffnung 23, welche am zweitweitesten von dem Hülsenabschnitts 10, insbesondere dessen Oberkante 15 entfernt ist. Die Strebe 60 bildet zumindest an der Radseite des Schwenklagers 1 eine weitere Rippe 61 aus. Diese weitere Rippe 61 setzt etwas unterhalb des dämpferseitigen Endes 16 der Diagonalrippe 14 am Außenumfang 12 des Hülsenabschnitts 10 an und ist auf die am zweitweitesten von dem Hülsenabschnitt 10 beanstandete Befestigungsöffnung 23 des Radlageranbindungsäbschnitts 20 hin ausgerichtet Sie weist eine kleinere Höhe und Breite als die Diagonalrippe 14 auf. Im Bereich des Hülsenabschnitts 10 schließt sie, in Blickrichtung auf die Radseite gemäß Figur 3, mit der Längsachse A des Hülsenabschnitts 10 einen Winkel im Bereich von 15 bis 35° ein. Der anfänglich geradlinige Verlauf geht dabei in eine leichte Krümmung nach oben über.

Ferner begrenzt die weitere Rippe 61 gemeinsam mit der Diagonalrippe 14 einen Dreiecksraum 70, der eine einwärts gerichtete Wanne oberhalb des Radlageranbindungsabschnitts 20 bildet. Zur weiteren Gewichtsersparnis kann, wie in Figur 3 dargestellt, im Bereich des Dreiecksraums 70 ein Durchbruch in Form eines Fensters 71 ausgebildet sein. Das Fenster 71 erstreckt sich im unteren Drittel des Dreiecksraums 70, das heißt in dem dem Radlageranbindungsabschnitt 20 benachbarten Bereich desselben.

Sind alle drei Rippen, nämlich die Vertikalrippe 18, die Diagonalrippe 14 und die weitere Rippe 61 vorgesehen, ergibt sich an dem Schwenklager 1 im Bereich des Hülsenabschnitts 10 und des Radlageranbindungsabschnitts 20 in Blickrichtung auf die Radseite eine Rippenstruktur in Form eines liegenden "S". Eine weitere Verrippung im Übergangsbereich vom Hülsenabschnitt 10 zum Radlageranbindungsabschnitt 20 ist auf der Radseite nicht vorgesehen. Die S-förmige Rippenstruktur lässt sich sowohl gießtechnisch als auch schmiedetechnisch einfach und kostengünstig herstellen.

Die Diagonalrippe 14 ist so ausgestaltet, dass über einen Bogenschenkel die Kräfte vom Radlager und vom Dämpfer bzw. Federbein direkt durchgeleitet werden können. Weiterhin werden darüber eingeleitete Bremsmomente aufgenommen.

Insgesamt zeichnet sich das vorstehend erläuterte Schwenklager 1 bei kompakter Bauweise durch eine über die Längsachse A des Hülsenabschnitts 10 hohe Steifigkeit aus.

Gleichzeitig besitzt das Schwenklager 1 im Vergleich zu herkömmlichen Schwenklagern mit Vierpunkt-Radlageranbindung ein verringertes Bauteilgewicht.

Die Erfindung ermöglicht somit eine leichtgewichtige Lösung für eine Dämpfer- bzw. Federbeinaufnahme an einem Schwenklager.

Die Erfindung wurde vorstehend anhand eines Ausführungsbeispiels näher erläutert. Sie ist jedoch nicht auf das Ausführungsbeispiel beschränkt, sondern umfasst alle durch die Patentansprüche definierten Ausgestaltungen.

### Bezugszeichenliste

- 1: Schwenklager
- 10: Hülsenabschnitt
- 11: Längsschlitz
- 12: Außenumfang
- 13: Klemmeinrichtung
- 14: Diagonalrippe
- 15: Oberkante des Hülsenabschnitts
- 16: dämpferseitiges Ende der Diagonalrippe
- 17: radlagerseitiges Ende der Diagonalrippe
- 18: Vertikalrippe
- 20: Radlageranbindungsabschnitt
- 21: topfförmige Vertiefung
- 22: zentrale Durchgangsöffnung
- 23: Befestigungsöffnung
- 30: Spurstangenanbindungsarm
- 31: Befestigungseinrichtung
- 40: Nocken
- 41: Befestigungseinrichtung zur Bremssattelankopplung
- 50: Führungsgelenkanbindungsabschnitt
- 51: Befestigungseinrichtung zur Führungsgelenkankopplung
- 60: Strebe
- 61: weitere Rippe
- 70: Dreiecksraum
- 71: Fenster
- A: Längsachse des Hülsenabschnitts
- B: Mittelachse der Durchgangsöffnung bzw. des Radlageranbindungsabschnitts

## Patentansprüche

1. Schwenklager für eine Fahrzeugradaufhängung, umfassend:
einen Hülsenabschnitt (10) mit einer Längsachse (A) zur Aufnahme eines Dämpfers oder Federbeins,
einen an den Hülsenabschnitt (10) angeformten Radlageranbindungsabschnitt (20), der eine Durchgangsöffnung (22) und um die Durchgangsöffnung (22) angeordnet Befestigungsöffnungen (23) zur Festlegung eines Radlagers an dem Radlageranbindungsabschnitt (20) aufweist, und
einen Spurstangenanbindungsarm (30),
wobei eine Diagonalrippe (14) aus dem Außenumfang (12) des Hülsenabschnitts (10) heraustritt, die die Längsachse (A) des Hülsenabschnitts (10) auf der Radseite querend zu der dem Hülsenabschnitt (10) nächstliegenden Befestigungsöffnung (23) des Radlageranbindungsabschnitts (20) leitet,
**dadurch gekennzeichnet, dass**
der Radlageranbindungsabschnitt (20) genau drei Befestigungsöffnungen (23) um die Durchgangsöffnung (22) aufweist, die sich jeweils in ihrer Lage in Bezug auf den Abstand von dem Hülsenabschnitt (10) voneinander unterscheiden,
eine Strebe (60) von dem Hülsenabschnitt (10) zu dem Spurstangenanbindungsarm (30) leitet, welche den Radlageranbindungsabschnitt (20) oberhalb derjenigen Befestigungsöffnung (23) tangiert, die am zweitweitesten von dem Hülsenabschnitt (10) entfernt ist, und
die Diagonalrippe (14) zwischen ihren Enden (16, 17) kreuzungsfrei ist.

2. Schwenklager für eine Fahrzeugradaufhängung nach Anspruch 1, **dadurch gekennzeichnet, dass** der Hülsenabschnitt (10) an seinem Außenumfang auf der Radseite eine Vertikalrippe (18) aufweist.

3. Schwenklager für eine Fahrzeugradaufhängung nach Anspruch 2, **dadurch gekennzeichnet, dass** die Vertikalrippe (18) in Richtung auf die dem Hülsenabschnitt (10) am nächsten liegende Befestigungsöffnung (23) des Radlageranbindungsabschriitts (20) zu verläuft.

4. Schwenklager für eine Fahrzeugradaufhängung nach einem der Ansprüche 1 bis 3, **dadurch gekennzeichnet, dass** die Strebe (60) zumindest an der Radseite eine weitere Rippe (61) ausbildet, welche mit der Diagonalrippe (14) einen Dreiecksraum (70) begrenzt, der eine einwärts gerichtete Wanne oberhalb des Radlageranbindungsabschnitts (20) bildet.

5. Schwenklager für eine Fahrzeugradaufhängung nach Anspruch 4, **dadurch gekennzeichnet, dass** im Bereich des Dreiecksraums (70) ein Durchbruch in Form eines Fensters (71) ausgebildet ist.

6. Schwenklager für eine Fahrzeugradaufhängung nach Anspruch 4 oder 5, **dadurch gekennzeichnet, dass** die Rippe (61) der Strebe (60) unterhalb der Diagonalrippe (14) aus dem Außenumfang (12) des Hülsenabschnitts (10) heraustritt.

7. Schwenklager für eine Fahrzeugradaufhängung nach einem der Ansprüche 4 bis 6, **dadurch gekennzeichnet, dass** die Rippe (61) der Strebe (60) auf die am zweitweitesten von dem Hülsenabschnitt (10) beanstandete Befestigungsöffnung (23) des Radlageranbindungsabschnitts (20) hin ausgerichtet ist.

8. Schwenklager für eine Fahrzeugradaufhängung nach einem der Ansprüche 1 bis 7, **dadurch gekennzeichnet, dass** dieses im Bereich des Hülsenabschnitts (10) und des Radlageranbindungsabschnitts (20) in Blickrichtung auf die Radseite eine Rippenstruktur in Form eines liegenden "S" aufweist.

9. Schwenklager für eine Fahrzeugradaufhängung nach einem der Ansprüche 1 bis 8, **dadurch gekennzeichnet, dass** dieses zwei Nocken (40) mit jeweils einem Anbindungspunkt (41) zur Ankopplung eines Bremssattels ausbildet, die Verbindungslinie der in Bremssattelanbindungspunkte (41) in Blickrichtung auf die Radseite im Wesentlichen parallel zu der Verbindungslinie zwischen den zwei Befestigungsöffnungen (23) des Radlageranbindungsabschnitts mit größtem und kleinstem Abstand zum Hülsenabschnitt (10) verläuft.

## Claims

1. Steering knuckle for a vehicle wheel suspension system, comprising:
a sleeve section (10) with a longitudinal axis (A) for receiving a damper or suspension strut,
a wheel bearing attachment section (20) which is formed integrally on the sleeve section (10) and has a through opening (22) and fastening openings (23) which are arranged around the through opening (22) for fixing a wheel bearing on the wheel bearing attachment section (20), and
a track rod attachment arm (30),
a diagonal rib (14) emerging from the outer circumference (12) of the sleeve section (10), which diagonal rib (14) leads the longitudinal axis (A) of the sleeve section (10) in a manner which traverses on the wheel side to the closest fastening opening (23) of the wheel bearing attachment section (20) to the sleeve section (10),
**characterized in that**
the wheel bearing attachment section (20) has precisely three fastening openings (23) around the through opening (22), which fastening openings (23) differ from
one another in each case in terms of their position in relation to the spacing from the sleeve section (10),
a strut (60) leads from the sleeve section (10) to the track rod attachment arm (30), which strut (60) is tangent to the wheel bearing attachment section (20) above that fastening opening (23) which is the second furthest from the sleeve section (10), and
the diagonal rib (14) is without junctions between its ends (16, 17).

2. Steering knuckle for a vehicle wheel suspension system according to Claim 1, **characterized in that** the sleeve section (10) has a vertical rib (18) on its outer circumference on the wheel side.

3. Steering knuckle for a vehicle wheel suspension system according to Claim 2, **characterized in that** the vertical rib (18) runs in the direction towards that fastening opening (23) of the wheel bearing attachment section (20) which lies closest to the sleeve section (10).

4. Steering knuckle for a vehicle wheel suspension system according to one of Claims 1 to 3, **characterized in that** the strut (60) forms a further rib (61) at least on the wheel side, which further rib (61) delimits a triangular space (70) with the diagonal rib (14), which triangular space (70) forms an inwardly directed trough above the wheel bearing attachment section (20).

5. Steering knuckle for a vehicle wheel suspension system according to Claim 4, **characterized in that** an aperture in the form of a window (71) is formed in the region of the triangular space (70).

6. Steering knuckle for a vehicle wheel suspension system according to Claim 4 or 5, **characterized in that** the rib (61) of the strut (60) emerges out of the outer circumference (12) of the sleeve section (10) below the diagonal rib (14).

7. Steering knuckle for a vehicle wheel suspension system according to one of Claims 4 to 6, **characterized in that** the rib (61) of the strut (60) is oriented towards that fastening opening (23) of the wheel bearing attachment section (20) which is second furthest from the sleeve section (10).

8. Steering knuckle for a vehicle wheel suspension system according to one of Claims 1 to 7, **characterized in that** the said steering knuckle has a rib structure in the form of a horizontal "S" in the region of the sleeve section (10) and of the wheel bearing attachment section (20) as viewed in the direction of the wheel side.

9. Steering knuckle for a vehicle wheel suspension system according to one of Claims 1 to 8, **characterized in that** the said steering knuckle forms two cams (40) with in each case one attachment point (41) for coupling a brake calliper, and the connecting line of the brake calliper attachment points (41) runs, as viewed in the direction of the wheel side, substantially parallel to the connecting line between the two fastening openings (23) of the wheel bearing attachment section at the greatest and smallest spacing from the sleeve section (10).

## Revendications

1. Palier pivotant pour une suspension de roue de véhicule, comprenant :
une portion de manchon (10) avec un axe longitudinal (A) pour recevoir un amortisseur ou une jambe de force,
une portion de liaison de palier de roue (20) façonnée sur la portion de manchon (10), qui présente une ouverture de passage (22) et des ouvertures de fixation (23) disposées autour de l'ouverture de passage (22) pour fixer un palier de roue sur la portion de liaison de palier de roue (20), et
un bras de liaison de barre d'accouplement (30),
une nervure diagonale (14) faisant saillie hors de la périphérie extérieure (12) de la portion de manchon (10), laquelle conduit l'axe longitudinal (A) de la portion de manchon (10) du côté de la roue transversalement à l'ouverture de fixation (23) de la portion de liaison de palier de roue (20) la plus proche de la portion de manchon (10), **caractérisé en ce que**
la portion de liaison de palier de roue (20) présente exactement trois ouvertures de fixation (23) autour de l'ouverture de passage (22), lesquelles se distinguent les unes des autres à chaque fois par leur position par rapport à leur distance à la portion de manchon (10),
une entretoise (60) conduit de la portion de manchon (10) au bras de liaison de barre d'accouplement (30), laquelle est tangente à la portion de liaison de palier de roue (20) au-dessus de l'ouverture de fixation (23) qui est la deuxième plus éloignée de la portion de manchon (10), et
la nervure diagonale (14) ne présente pas d'intersection entre ses extrémités (16, 17).

2. Palier pivotant pour une suspension de roue de véhicule selon la revendication 1, **caractérisé en ce que** la portion de manchon (10) présente, au niveau de sa périphérie extérieure, du côté de la roue, une nervure verticale (18).

3. Palier pivotant pour une suspension de roue de véhicule selon la revendication 2, **caractérisé en ce que** la nervure verticale (18) s'étend dans la direction de l'ouverture de fixation (23) de la portion de liaison de palier de roue (20) la plus proche de la portion de manchon (10).

4. Palier pivotant pour une suspension de roue de véhicule selon l'une quelconque des revendications 1 à 3, **caractérisé en ce que** l'entretoise (60) constitue au moins au niveau du côté de la roue une nervure supplémentaire (61) qui limite avec la nervure diagonale (14) un espace triangulaire (70) qui forme une cuvette orientée vers l'intérieur au-dessus de la portion de liaison de palier de roue (20).

5. Palier pivotant pour une suspension de roue de véhicule selon la revendication 4, **caractérisé en ce qu'**un orifice est réalisé en forme de fenêtre (71) dans la région de l'espace triangulaire (70).

6. Palier pivotant pour une suspension de roue de véhicule selon la revendication 4 ou 5, **caractérisé en ce que** la nervure (61) de l'entretoise (60) fait saillie en dessous de la nervure diagonale (14) hors de la périphérie extérieure (12) de la portion de manchon (10).

7. Palier pivotant pour une suspension de roue de véhicule selon l'une quelconque des revendications 4 à 6, **caractérisé en ce que** la nervure (61) de l'entretoise (60) est orientée vers l'ouverture de fixation (23) de la portion de liaison de palier de roue (20) la deuxième plus éloignée de la portion de manchon (10).

8. Palier pivotant pour une suspension de roue de véhicule selon l'une quelconque des revendications 1 à 7, **caractérisé en ce que** celui-ci présente, dans la région de la portion de manchon (10) et de la portion de liaison de palier de roue (20), dans la direction d'observation, sur le côté de la roue, une structure nervurée en forme de "S" couché.

9. Palier pivotant pour une suspension de roue de véhicule selon l'une quelconque des revendications 1 à 8, **caractérisé en ce que** celui-ci constitue deux cames (40) ayant chacune un point de liaison (41) pour l'accouplement d'un étrier de frein, et la ligne de connexion s'étend dans des points de liaison de l'étrier de frein (41) dans la direction d'observation, du côté de la roue, essentiellement parallèlement à la ligne de connexion entre les deux ouvertures de fixation (23) de la portion de liaison de palier de roue présentant respectivement la plus grande et la plus petite distance à la portion de manchon (10).
